# EUROPEAN PATENT SPECIFICATION

(11) **EP 1 941 733 B1**
(45) Date of publication and mention of the grant of the patent: **17.03.2010**
(21) Application number: 06772773.5
(22) Date of filing: 09.06.2006
(51) Int. Cl.: H04N 7/24, H04N 7/26, H04B 1/38, H04N 7/14

(54) **DISPLAYING MOBILE TELEVISION SIGNALS ON A SECONDARY DISPLAY DEVICE**
ANZEIGEN VON MOBILFERNSEHSIGNALEN AUF EINER SEKUNDÄREN ANZEIGEEINRICHTUNG
AFFICHAGE DE SIGNAUX DE TELEVISION MOBILES SUR UN DISPOSITIF D'AFFICHAGE SECONDAIRE

(30) Priority: 25.10.2005 US 163613
(43) Date of publication of application: 09.07.2008
(73) Proprietor: Sony Ericsson Mobile Communications AB, 221 88 Lund (SE)
(72) Inventor: BLOEBAUM, Leland Scott, Cary, North Carolina 27519 (US); LIU, Chuanli, Chapel Hill, North Carolina 27514 (US)
(74) Representative: Charles, Glyndwr
(86) International application number: PCT/US2006/022589
(87) International publication number: WO 2007/050138

(56) References cited:
- EP-A1- 1 213 896
- EP-A2- 1 059 809
- WO-A-02/43389
- GB-A- 2 353 445
- JP-A- 2000 324 544
- US-A1- 2003 130 009
- US-A1- 2004 185 902
- US-A1- 2005 101 343
- CARSTEN KRISCHKER MARKUS SCHLOEZER ANDREAS TENNERT TOBIAS HEPPNER: "Mobile Phone mit RGB-Video-Output Schnittstelle" IP.COM JOURNAL, IP.COM INC., WEST HENRIETTA, NY, US, 23 July 2003 (2003-07-23), XP013011740 ISSN: 1533-0001

## Description

### BACKGROUND OF THE INVENTION

The present invention relates to portable mobile communications devices and systems, and more particularly to a portable mobile communications device, system and method that can display mobile television signals on multiple secondary display devices of live television broadcast signals from the mobile device.

Portable mobile communications devices such as mobile phones are becoming more sophisticated and include many new features and capabilities. One such feature is the capability to receive mobile broadcast television signals or mobile television or the like, such as digital video broadcast-handheld (DVB-H), digital media broadcast (DMB), integrated services digital broadcast-terrestrial (ISDB-T), mobile broadcast multi-cast service (MBMS), or similar technologies. When integrated into a mobile phone, all of the aforementioned technologies utilize a separate mobile television tuner except for MBMS which can be received using the portable mobile communications device existing mobile radio receiver and transmitter.

The convenience factor for receiving such broadcasting is high for mobile users. However, the user is constrained to viewing a single program on the primary display of the portable mobile communications device even if there are one or more secondary display devices within short range of the portable mobile communications device. This would be especially useful for multiple individuals sharing a confined space such as during an extended automobile trip. What is needed is a means for selecting one or more additional channels to view from the incoming mobile television broadcast and selectively sending out the specific channel selections to a secondary display device for rendering on the secondary display device.

### BRIEF SUMMARY OF THE INVENTION

In accordance with an embodiment of the present invention, there is described a method of displaying, on a secondary display device, a channel of a mobile television broadcast comprised of multiple channels of content data that was sent to a primary portable mobile communications device. A mobile television broadcast is received by a mobile television receiver in the portable mobile communications device. The user inputs or selects a channel to view on a secondary display device. The mobile television receiver signal processor unpacks the selected channel content data intended for the secondary display device and forwards the data to a secondary short range wireless RF transmitter within the portable mobile communications device. The selected channel content data is then sent to the secondary display device so that it can be decoded and rendered on the secondary display device.

### BRIEF DESCRIPTION OF THE DRAWINGS

Figure 1 is a block diagram of an exemplary system for utilizing multiple displays to display multiple channels of a mobile television broadcast in accordance with an embodiment of the present invention.
Figure 2 is a block diagram of an exemplary portable mobile communications device for use within the system of Figure 1 for utilizing multiple displays to display multiple channels of a mobile television broadcast in accordance with an embodiment of the present invention.
Figure 3 is a block diagram of a primary portable mobile communications and a secondary device capable of communicating with and receiving content from a mobile television service provider via the primary portable mobile communications device.
Figure 4 is a data flow diagram of a method for utilizing multiple displays to display multiple channels of a mobile television broadcast in accordance with an embodiment of the present invention.

### DETAILED DESCRIPTION OF THE INVENTION

The following detailed description of embodiments refers to the accompanying drawings, which illustrate specific embodiments of the invention. Other embodiments having different structures and operations do not depart from the scope of the present invention.

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

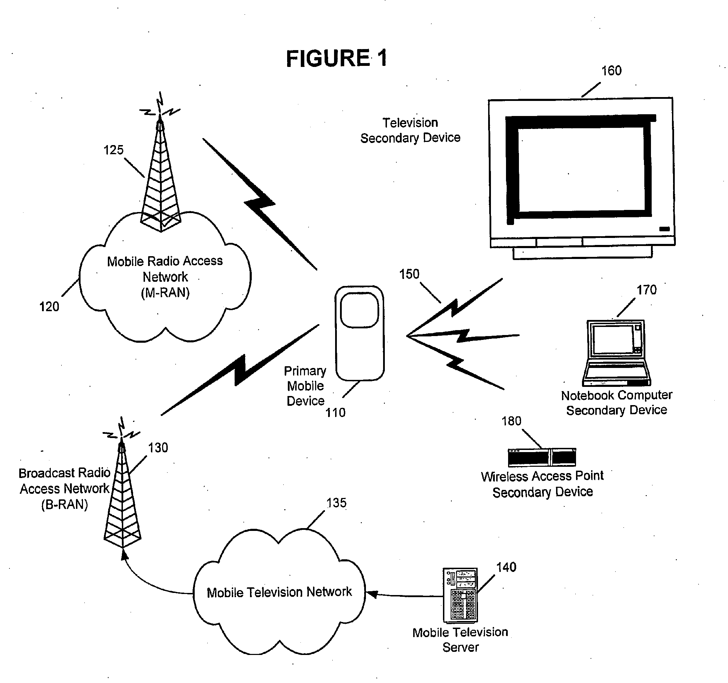

Figure 1 is a block diagram of an exemplary system utilizing multiple displays to display multiple channels of a mobile television broadcast in accordance with an embodiment of the present invention. The system 100 may be a digital video broadcast-handheld (DVB-H), digital media broadcast (DMB), integrated services digital broadcast-terrestrial (ISDB-T), mobile broadcast multi-cast service (MBMS), or other similar technology. When integrated into a mobile phone, all of the aforementioned technologies utilize a separate mobile television tuner except for MBMS which can be received using the portable mobile communications device existing mobile radio receiver and transmitter.

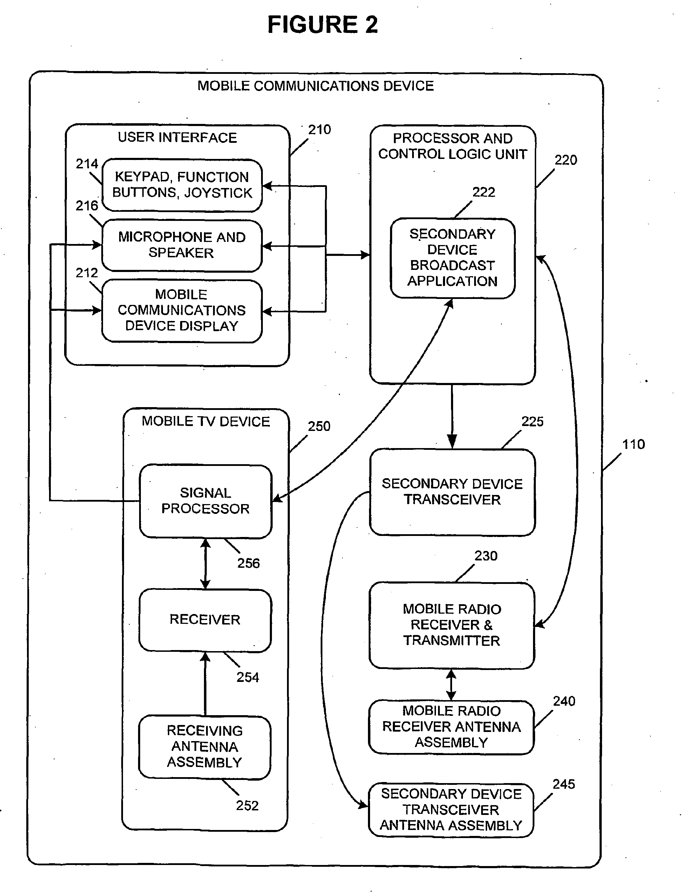

The portable mobile communications device 110 may be a cordless telephone, cellular telephone, personal digital assistant (PDA), communicator, computer device or the like and is not unique to any particular communications standard, such as Advanced Mobile Phone Service (AMPS), Digital Advanced Mobile Phone Service (D-AMPS), Global System for Mobile Communications (GSM), Code Division Multiple Access (CDMA) or the like. The design of the portable mobile communications device 110 illustrated in Figure 2 is for purposes of explaining the present invention and the present invention is not limited to any particular design.

The portable mobile communications device 110 shown in Figure 2 may include an operator or user interface 210 to facilitate controlling operation of the portable mobile communications device 110 including initiating and conducting phone calls and other communications. The user interface 210 may include a display 212 to provide visual signals to a subscriber or user as to the status and operation of the portable mobile communications device 110. The display 212 may be a liquid crystal display (LCD) or the like capable of presenting color images. The display 212 may provide information to a user or operator in the form of images, text, numerals, characters, a graphical user interface (GUI) and the like. The display 212 may also be used to present programming carried by the mobile television broadcast signals.

The user interface 212 may also include a keypad and function keys or buttons 214 including a pointing device, such as a joystick or the like. The keypad, function buttons and joystick 214 permit the user to communicate commands to the portable mobile communications device 110 to dial phone numbers, initiate and terminate calls, establish other communications, such as access to a mobile TV provider, the Internet, send and receive email, text messages and the like. The keypad, function buttons and joystick 214 may also be used to control other operations of the portable mobile communications device 110. The keypad, function buttons and joystick 214 may also be implemented on a touch sensitive display adapted to receive tactile input.

The display 212, keypad, and function buttons 214 may be coupled to a main processor and control logic unit 220. The processor and control logic unit 220 may be a microprocessor or the like. The processor and logic unit 220 may include an application 222 to enable secondary devices to display programming received by the 'primary' portable mobile communications device 110. The secondary device broadcast application 222 may be embodied in hardware, firmware, software (data structures) or combinations thereof. The processor and logic unit 220 may also include other data structures, software programs, computer applications and the like to encode and decode control signals; perform communication procedures and other functions as described herein.

The user interface 210 may also include a microphone and a speaker 216. The microphone 216 may receive audio or acoustic signals from a user or from another acoustic source. The microphone 216 may convert the audio or acoustic signals to electrical signals. The microphone 216 may be connected to the processor and logic unit 220 wherein the processor and logic unit 220 may convert the electrical signals to baseband communication signals. The processor and control logic unit 220 may be connected to a mobile radio transmitter and receiver 230 that may convert baseband signals from the processor and control logic unit 220 to radio frequency (RF) signals. The mobile radio transmitter and receiver 230 may be connected to an antenna assembly 240 for transmission of the RF signals to a communication medium or system, such as a mobile radio access network (MRAN) 120 or the like. Mobile radio transmitter and receiver 230 can also receive mobile television broadcasts according to the MBMS standard. In this scenario, the MRAN 120 acts as the mobile television service provider.

The mobile radio antenna assembly 240 of portable mobile communications device 110 may receive RF signals over the air and transfer the RF signals to a mobile radio receiver and transmitter 230. The mobile radio receiver and transmitter 230 may convert the RF signals to baseband signals. The baseband signals may be applied to the processor and control logic unit 220 which may convert the baseband signals to electrical signals. The processor and control unit 220 may send the electrical signals to the speaker 216 which may convert the electrical signals to audio signals that can be understood by the user.

The portable mobile communications device 110 may also include a separate mobile television device 250. The mobile television device 250 may be a DVB-H type device or the like. The mobile television device 250 may be integrally formed as part of the portable mobile communications device 110 or may be a separate unit that may be connected and operate in association with the portable mobile communications device 110. The mobile television device 250 may include an antenna assembly 252 for receiving broadcast signals of programming from a mobile television broadcast network, broadcast radio access network (B-RAN) 130 or the like. A receiver 254 may be coupled to the antenna assembly 252 to receive the broadcast signals. A signal processor 256 may receive the broadcast signals from the receiver 254 and convert the signals to a format for presentation on the display 212 of the portable mobile communications device 110. Or, a signal processor 256 may receive the broadcast signals from the receiver 254 and convert the signals to a format for presentation on the display 212 of the portable mobile communications device 110.

A secondary device transceiver antenna assembly 245 is paired with a secondary device transceiver 225 to rebroadcast content received by the mobile television device 250. The secondary device transceiver 225 is a shorter range wireless transport protocol such as Bluetooth^{™}, 802.11*x*, WiFi, Ultrawide Band (wireless USB), or the like.

A B-RAN 130 may originate the mobile television or DVB-H broadcast signals for broadcasting to communications devices or mobile television devices, such as portable mobile communications device 110 and mobile television device 250. The B-RAN 130 may include a transmitter to transmit the broadcast signals.

The B-RAN 130 may be connected to a mobile television network 135. The mobile television network 135 may originate programming for broadcasting to portable mobile communications devices 110 or mobile television devices 250 via the B-RAN 130. The mobile television network 135 may include a mobile television server 140.

Secondary devices such as a television 160, a notebook computer 170 or a wireless access point 180 can be options to receive rebroadcast signals 150 from the primary receiving device (portable mobile communications device 110).

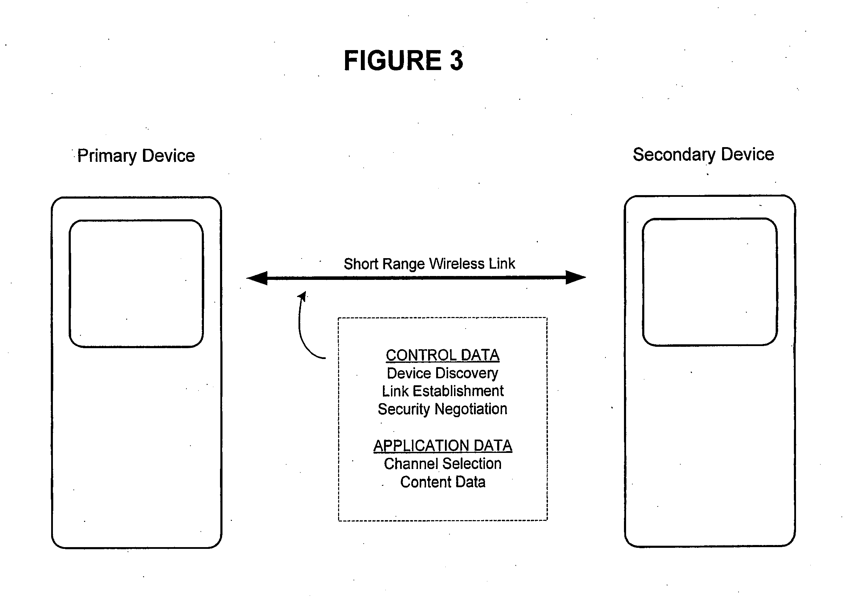

Figure 3 is a block diagram of a primary portable mobile communications and a secondary device capable of communicating with and receiving content from a mobile television service provider via the primary portable mobile communications device. The primary device is responsible for receiving the mobile television content from the mobile television service provider. The secondary device may be used as a secondary receiver of the original content sent to the primary device. Prior to receiving any content from the primary device, the secondary device must be discovered by the primary device and a secure communications link established. The particular control data for discovery, link establishment, and security between the primary and secondary devices will depend on the wireless standard chosen. Options include, but are not limited to, Bluetooth^{™}, 802.11*x*, WiFi, and wireless USB.

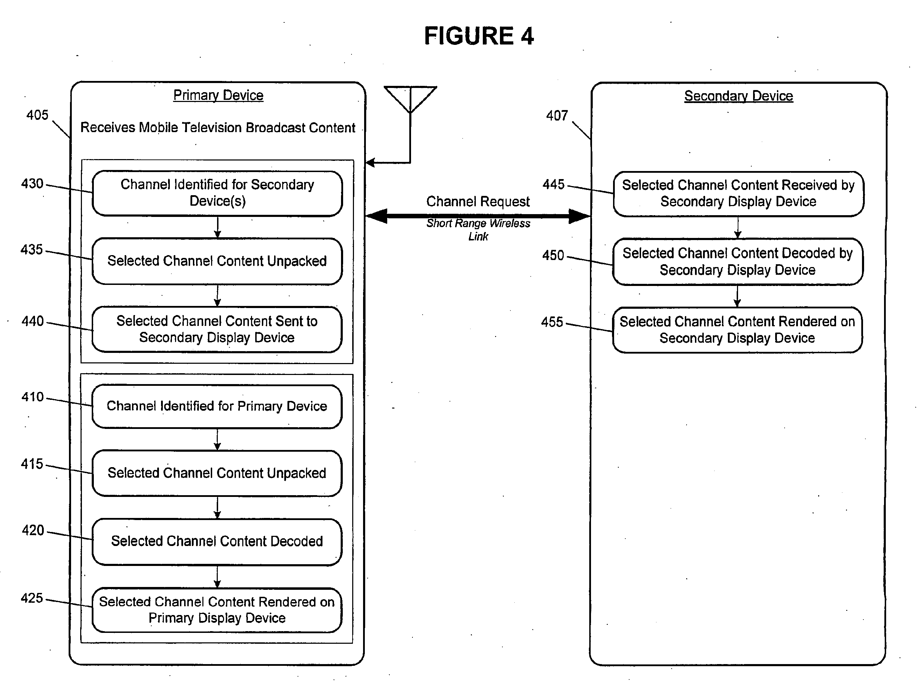

Once communications between the primary and secondary devices have been established, the primary and secondary devices can exchange data. For instance, the secondary device can access an electronic program guide on the primary device so as to allow the secondary device the ability to choose a program to receive from a particular channel on the electronic program guide. Once a selection has been made, the primary device can forward the content to the secondary device according to a method described in Figure 4.

Figure 4 is a data flow diagram of a method for utilizing multiple displays (primary 405 and secondary 407) to display multiple channels of a mobile television broadcast in accordance with an embodiment of the present invention. The mobile television device receiver within the primary device 405 is turned on and receives a mobile television broadcast from a mobile television service provider. It is likely tuned to a default channel or the last channel viewed. The viewer then identifies and selects one or more channels to be associated with the primary 410 and secondary 430 display devices. To facilitate channel selection, a programming guide can be consulted. The secondary device 407 is also capable of requesting a channel to receive from the primary device once a secure link has been established between the primary 405 and secondary 407 devices as described in Figure 3.

The mobile television device receiver then captures the content for the selected channels. For the primary display device, the desired channel content data is unpacked 415 from an Internet Protocol (IP) type stream of data by the mobile television device receiver signal processor. The unpacked content data is then decoded 420 using the appropriate decoder such as, for instance, an MPEG 4.0 decoder. Once decoded, the data is ready to be rendered 425 on the primary display 405 to be seen and heard by the viewer.

Similarly, content earmarked for secondary display devices is unpacked by the mobile television device receiver signal processor 435. The unpacked data is then wirelessly sent to the appropriate secondary display device(s) 440. The secondary display device(s) receive 445 and decode 450 the re-broadcasted content data. The decoded content data can then be rendered 455 on the secondary display device 407.

Any prompts associated with the invention may be presented and responded to via an interactive voice feature, a graphical user interface (GUI) presented on the display of the portable mobile communications device or the like.

The flowcharts and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A portable mobile communications device (110) for receiving a mobile television broadcast and displaying content on at least one secondary display device (160,170,180) comprising:
a mobile television receiver (254) for receiving a mobile television broadcast comprised of multiple channels of content data;
a mobile television signal processor (256) coupled with the mobile television receiver for:
unpacking a mobile television broadcast signal into multiple data streams, one for each channel that was broadcast; and
decoding one of the unpacked data streams so that the data can be rendered on a primary display (212) within the portable mobile communications device (110) and at least one secondary display device (160, 170, 180);
a portable mobile communications device signal processor (220) for receiving unpacked data streams from the mobile television signal processor (256); and
a secondary transceiver (225) within the portable mobile communications device (110) coupled with the portable mobile communications device signal processor (220) for transmitting the unpacked data streams to the at least one secondary display device (160, 170, 180) where they can be decoded by and rendered on the at least one secondary display device (160, 170, 180), each at least one secondary display device (160, 170, 180) displaying a different data stream allowing a user to view multiple channels at one time by viewing the primary display (212) within the portable mobile communications device (110) and each at least one secondary display device (160, 170, 180).

2. The portable mobile communications device (110) of claim 1 wherein the secondary transceiver (225) receives control data from each secondary display device (160, 170, 180), the control data for establishing a secure wireless communications link between the portable mobile communications device (110) and each secondary display device (160, 170, 180).

3. The portable mobile communications device (110) of claim 2 wherein the secondary transceiver (225) receives channel selection data from each secondary display device (160, 170, 180), the channel selection data for identifying the content to be sent from the portable mobile communications device (110) to each secondary display device (160, 170, 180).

4. The portable mobile communications device (110) of claim 3 wherein the secondary transceiver (225) operates using a short range wireless RF standard.

5. The portable mobile communications device (110) of claim 3 wherein the secondary transceiver (225) operates using a Bluetooth^{™} wireless standard.

6. The portable mobile communications device (110) of claim 3 wherein the secondary transceiver (225) operates using an 802.11*x* wireless standard.

7. A method of displaying, on a secondary display device (160, 170, 180), a channel of a mobile television broadcast comprised of multiple channels of content data that was sent to a primary portable mobile communications device (100), the method comprising:
in the portable mobile communications device (110):
receiving the mobile television broadcast via a mobile television receiver (405);
receiving input identifying a channel to be displayed on at least one secondary display device (160, 170, 180);
unpacking the identified at least one channel content data (435);
sending the unpacked at least one channel content to the at least one secondary display device (160, 170, 180) so that it can be rendered on each at least one secondary display device (160, 170, 180), each at least one secondary display device (160 170, 180) displaying a different channel allowing a user to view multiple channels at one time by viewing the primary display (212) within the portable mobile communications device (110) and each at least one secondary display device (160, 170, 180).

8. The method of claim 7 further comprising receiving control data from each at least one secondary display device (160, 170, 180), the control data for establishing a secure wireless communications link between the portable mobile communications device and each at least one secondary display device (160, 170, 180).

9. The method of claim 8 further comprising receiving channel selection data from each at least one secondary display device (160, 170, 180), the channel selection data for identifying the content to be sent from the portable mobile communications device to each at least one secondary display device (160, 170, 180).

## Patentansprüche

1. Tragbare Mobilkommunikationseinrichtung (110) zum Empfangen eines Mobilfernsehbroadcast und zum Anzeigen eines Inhalts auf mindestens einer sekundären Displayeinrichtung (160, 170, 180), mit:
einem Mobilfernsehempfänger (254) zum Empfangen eines Mobilfernsehbroadcasts, der mehrere Kanäle von Inhaltsdaten umfasst;
einem Mobilfernsehsignalprozessor (256), der mit dem Mobilfernsehempfänger (254) gekoppelt ist, zum:
Entpacken eines Mobilfernsehbroadcastsignales in mehrere Datenströme, wobei jeweils ein Datenstrom für jeden Kanal, der ausgestrahlt wird, vorgesehen ist; und
Decodieren eines der entpackten Datenströme, so dass die Daten auf einem primären Display (212) innerhalb der tragbaren Mobilkommunikationseinrichtung (110) und mindestens einer sekundären Displayeinrichtung (160, 170, 180) wiedergegebbar sind;
einem Signalprozessor (220) für die tragbare Mobilkommunikationseinrichtung (110) zum Empfangen entpackter Datenströme von dem Mobilfernsehsignalprozessor (256); und mit
einem sekundären Sendeempfänger (225) innerhalb der tragbaren Mobilkommunikationseinrichtung (110), der mit dem Signalprozessor (220) für die tragbare Mobilkommunikationseinrichtung gekoppelt ist, zum Übertragen der entpackten Datenströme zu der mindestens einen sekundären Displayeinrichtung (160, 170, 180), wobei sie von der mindestens einen sekundären Displayeinrichtung (160, 170, 180) decodiert und darauf wiedergegeben werden können, wobei jede mindestens eine sekundäre Displayeinrichtung (160, 170, 180) einen anderen Datenstrom anzeigt, wodurch ein Benutzer durch Betrachten des primären Displays (212) innerhalb der tragbaren Mobilkommunikationseinrichtung (110) und jeder mindestens einen sekundären Displayeinrichtung (160, 170, 180) gleichzeitig mehrere Kanäle betrachten kann.

2. Tragbare Mobilkommunikationseinrichtung (110) nach Anspruch 1, wobei der sekundäre Sendeempfänger (225) Steuerdaten von jeder sekundären Displayeinrichtung (160, 170, 180) empfängt, wobei die Steuerdaten bestimmt sind für das Herstellen einer sicheren drahtlosen Kommunikationsstrecke zwischen der tragbaren Mobilkommunikationseinrichtung (110) und jeder sekundären Displayeinrichtung (160, 170, 180).

3. Tragbare Mobilkommunikationseinrichtung (110) nach Anspruch 2, wobei der sekundäre Sendeempfänger (225) Kanalwahldaten von jeder sekundären Displayeinrichtung (160, 170, 180) empfängt, wobei die Kanalwahldaten bestimmt sind für das Identifizieren des von der tragbaren Mobilkommunikationseinrichtung (110) zu jeder sekundären Displayeinrichtung (160, 170, 180) zu sendenden Inhalts.

4. Tragbare Mobilkommunikationseinrichtung (110) nach Anspruch 3, wobei der sekundäre Sendeempfänger (225) unter Einsatz eines kurzreichweitigen HF-Drahtlosstandards arbeitet.

5. Tragbare Mobilkommunikationseinrichtung (110) nach Anspruch 3, wobei der sekundäre Sendeempfänger (225) unter Einsatz eines Bluetooth™-Drahtlosstandards arbeitet.

6. Tragbare Mobilkommunikationseinrichtung (110) nach Anspruch 3, wobei der sekundäre Sendeempfänger (225) unter Einsatz eines Drahtlosstandards 802.11 x arbeitet.

7. Verfahren zum Anzeigen, auf einer sekundären Displayeinrichtung (160, 170, 180), eines Kanals eines Mobilfernsehrundfunks, der mehrere Kanäle von Inhaltsdaten umfasst, die an eine primäre tragbare Mobilkommunikationseinrichtung (110) gesendet wurden, wobei das Verfahren folgende Schritte aufweist:
bei der tragbaren Mobilkommunikationseinrichtung (110):
Empfangen des Mobilfernsehrundfunks über einen Mobilfernsehempfänger (405);
Empfangen einer Eingabe, die einen auf mindestens einer sekundären Displayeinrichtung (160, 170, 180) zu empfangenden Kanals identifiziert;
Entpacken der identifizierten mindestens einen Kanalinhaltsdaten (435);
Senden des entpackten mindestens einen Kanalinhalts an die mindestens eine sekundäre Displayeinrichtung (160, 170, 180), so dass sie auf jede mindestens eine sekundäre Displayeinrichtung (160, 170, 180) wiedergegeben werden können, wobei jede mindestens eine sekundäre Displayeinrichtung (160, 170, 180) einen anderen Kanal anzeigt, wodurch ein Benutzer durch Betrachten des primären Displays (212) innerhalb der tragbaren Mobilkommunikationseinrichtung (110) und jeder mindestens einen sekundären Displayeinrichtung (160, 170, 180) gleichzeitig mehrere Kanäle betrachten kann.

8. Verfahren nach Anspruch 7, weiterhin umfassend das Empfangen von Steuerdaten von jeder mindestens einen sekundären Displayeinrichtung (160, 170, 180), wobei die Steuerdaten bestimmt sind für das Herstellen einer sicheren drahtlosen Kommunikationsstrecke zwischen der tragbaren Mobilkommunikationseinrichtung und jeder mindestens einen sekundären Displayeinrichtung (160, 170, 180).

9. Verfahren nach Anspruch 8, weiterhin umfassend das Empfangen von Kanalwahldaten von jeder mindestens einen sekundären Displayeinrichtung (160, 170, 180), wobei die Kanalwahldaten bestimmt sind für das Identifizieren des von der tragbaren Mobilkommunikationseinrichtung zu jeder mindestens einen sekundären Displayeinrichtung (160, 170, 180) zu sendenden Inhalts.

## Revendications

1. Dispositif portatif de communications mobiles (110) pour recevoir une émission de télévision mobile et afficher un contenu sur au moins un dispositif d'affichage secondaire (160, 170, 180) comprenant :
un récepteur de télévision mobile (254) pour recevoir une émission de télévision mobile composée de canaux multiples de données de contenu ;
un processeur de signal de télévision mobile (256) relié au récepteur de télévision mobile pour :
décompacter un signal d'émission de télévision mobile en flots de données multiples, un pour chaque canal qui a été diffusé ; et
décoder un des flots de données décompactés de sorte que les données peuvent être restituées sur un afficheur primaire (212) à l'intérieur du dispositif portatif de communications mobiles (110) et sur au moins un dispositif d'affichage secondaire (160, 170, 180) ;
un processeur de signal de dispositif portatif de communications mobiles (220) pour recevoir des flots de données décompactés en provenance du processeur de signal de télévision mobile (256) ; et
un émetteur-récepteur secondaire (225) à l'intérieur du dispositif portatif de communications mobiles (110) relié au processeur de signal de dispositif portatif de communications mobiles (220) pour transmettre les flots de données décompactés à l'au moins un dispositif d'affichage secondaire (160, 170, 180) où ils peuvent être décodés par et restitués sur l'au moins un dispositif d'affichage secondaire (160, 170, 180), chaque au moins un dispositif d'affichage secondaire (160, 170, 180) affichant un flot de données différent permettant à un utilisateur de visualiser des canaux multiples à un moment donné en regardant l'afficheur primaire (212) à l'intérieur du dispositif portatif de communications mobiles (110) et chaque au moins un dispositif d'affichage secondaire (160, 170, 180).

2. Dispositif portatif de communications mobiles (110) selon la revendication 1, dans lequel l'émetteur-récepteur secondaire (225) reçoit des données de commande en provenance de chaque dispositif d'affichage secondaire (160, 170, 180), les données de commande servant à établir une liaison de communication sans fil sécurisée entre le dispositif portatif de communications mobiles (110) et chaque dispositif d'affichage secondaire (160, 170, 180).

3. Dispositif portatif de communications mobiles (110) selon la revendication 2, dans lequel l'émetteur-récepteur secondaire (225) reçoit des données de sélection de canal en provenance de chaque dispositif d'affichage secondaire (160, 170, 180), les données de sélection de canal servant à identifier le contenu à envoyer depuis le dispositif portatif de communications mobiles (110) à chaque dispositif d'affichage secondaire (160, 170, 180).

4. Dispositif portatif de communications mobiles (110) selon la revendication 3, dans lequel l'émetteur-récepteur secondaire (225) fonctionne en utilisant une norme HF sans fil de courte portée.

5. Dispositif portatif de communications mobiles (110) selon la revendication 3, dans lequel l'émetteur-récepteur secondaire (225) fonctionne en utilisant une norme sans fil Bluetooth™.

6. Dispositif portatif de communications mobiles (110) selon la revendication 3, dans lequel l'émetteur-récepteur secondaire (225) fonctionne en utilisant une norme sans fil 802.11x.

7. Procédé d'affichage, sur un dispositif d'affichage secondaire (160, 170, 180), d'un canal d'une émission de télévision mobile composée de canaux multiples de données de contenu qui ont été envoyées à un dispositif portatif de communications mobiles primaire (110), le procédé comprenant :
dans le dispositif portatif de communications mobiles (110) :
la réception de l'émission de télévision mobile par l'intermédiaire d'un récepteur de télévision mobile (405) ;
la réception d'une entrée identifiant un canal à afficher sur au moins un dispositif d'affichage secondaire (160, 170, 180) ;
le décompactage des données de contenu du au moins un canal identifié (435) ;
l'envoi du contenu décompacté du au moins un canal à l'au moins un dispositif d'affichage secondaire (160, 170, 180) de sorte qu'il peut être restitué sur chaque au moins dispositif d'affichage secondaire (160, 170, 180), chaque au moins un dispositif d'affichage secondaire (160, 170, 180) affichant un canal différent permettant à un utilisateur de visualiser des canaux multiples à un moment donné en regardant l'afficheur primaire (212) à l'intérieur du dispositif portatif de communications mobiles (110) et chaque au moins un dispositif d'affichage secondaire (160, 170, 180).

8. Procédé selon la revendication 7, comprenant en outre la réception de données de commande en provenance de chaque au moins un dispositif d'affichage secondaire (160, 170, 180), les données de commande servant à établir une liaison de communication sans fil sécurisée entre le dispositif portatif de communications mobiles et chaque au moins un dispositif d'affichage secondaire (160, 170, 180).

9. Procédé selon la revendication 8, comprenant en outre la réception de données de sélection de canal en provenance de chaque au moins un dispositif d'affichage secondaire (160, 170, 180), les données de sélection de canal servant à identifier le contenu à envoyer depuis le dispositif portatif de communications mobiles à chaque au moins un dispositif d'affichage secondaire (160, 170, 180).
